# EUROPEAN PATENT SPECIFICATION

(11) **EP 3 833 864 B1**
(45) Date of publication and mention of the grant of the patent: **12.04.2023**
(21) Application number: 19752901.9
(22) Date of filing: 02.08.2019
(51) Int. Cl.: F02M 35/09

(54) **FILTER ELEMENTS AND SYSTEMS WITH DATA CONVEYANCE FEATURES**
FILTERELEMENTE UND SYSTEME MIT DATENWEITERLEITUNGSFUNKTIONEN
ÉLÉMENTS FILTRANTS ET SYSTÈMES DOTÉS DE CARACTÉRISTIQUES DE TRANSPORT DE DONNÉES

(30) Priority: 07.08.2018 US 201862715551 P
(43) Date of publication of application: 16.06.2021
(73) Proprietor: Donaldson Company, Inc., Bloomington, MN 55431 (US)
(72) Inventor: ADAMEK, Daniel E., Minneapolis, Minnesota 55440-1299 (US); TUCKER, Brian R., Minneapolis, Minnesota 55440-1299 (US); MULDER, David W., Minneapolis, Minnesota 55440-1299 (US); ANDERSON, Matthew, Minneapolis, Minnesota 55440-1299 (US); LOCKERT, Michael J., Minneapolis, Minnesota 55440-1299 (US)
(74) Representative: PGA S.p.A., Milano, Succursale di Lugano
(86) International application number: PCT/US2019/044944
(87) International publication number: WO 2020/033268

(56) References cited:
- WO-A1-2017/192729
- DE-A1-102014 015 397
- US-A1- 2009 143 954
- US-A1- 2013 220 900
- US-A1- 2017 173 505

## Description

### Field

Embodiments herein relate to filter elements and filtration systems. More specifically, embodiments herein relate to filter elements and filtration systems configured to convey data.

### Background

Fluid streams often carry particulate material therein. In many instances, it is desirable to remove some or all of the particulate material from a fluid flow stream. For example, air intake streams to engines for motorized vehicles or power generation equipment, gas streams directed to gas turbines, and air streams to various combustion furnaces, often include particulate material therein. The particulate material, should it reach the internal workings of the various mechanisms involved, can cause substantial damage thereto. It is therefore desirable for such systems to remove the particulate material from the fluid flow upstream of the engine, turbine, furnace or other equipment involved.

A variety of air filter or gas filter arrangements have been developed for particulate removal. Beyond particulate removal, filtration systems can also be used as gas phase or liquid phase contaminant removal systems.

Many filtration systems include portions that are designed to be substantially permanent (such as filter housings) and portions that are designed to be replaced periodically to assure proper operation (such as filter elements that fit within filter housings).

WO2017/192729A1 discloses a filter system with a wireless identification tag coupled to a replaceable filter element to identify the filter element.

DE102014015397A1 is directed to a filter device for a motor vehicle, comprising at least one gas filter element arranged in a corresponding housing and a sensor device for determining a parameter, whcih is the installation position of the filter element and time of installation of the filter element. The parameter is transferable to an evaluation unit for evaluating the parameter.

US2013/220900A1 discloses a filter, and a system, such as an engine, that uses the filter.

A wireless tag mounted on the filter head or on the filter is used to communicate an identifier that identifies the filter and/or the filter media cartridge installed therein, the manufacturer, date of manufacture, when the filter or the filter media cartridge was installed, status of the filter or the filter media cartridge and the like.

US2009/143954 is directed to an engine exhaust after-treatment system including a particulate trap configured to remove at least some constituents of the exhaust flowing from an engine through an exhaust system. The after-treatment system includes a memory device associated with the particulate trap configured to store usage data indicative of how much time particulate trap has been used in service.

### SUMMARY

A filter element according to the invention is disclosed in any one of claims 1-6.

A filtration system according to the invention is disclosed in any one of claims 7-9.

A method of providing data to a filtration system according to the invention is disclosed in any one of claims 10-15.

This summary is an overview of some of the teachings of the present application and is not intended to be an exclusive or exhaustive treatment of the present subject matter. Further details are found in the detailed description and appended claims. Other aspects will be apparent to persons skilled in the art upon reading and understanding the following detailed description and viewing the drawings that form a part thereof, each of which is not to be taken in a limiting sense. The scope herein is defined by the appended claims and their legal equivalents.

### Brief Description of the Figures

Aspects may be more completely understood in connection with the following drawings, in which:
FIG. 1 is a schematic view of a supply chain flow of filter elements in accordance with various embodiments herein.
FIG. 2 is a schematic cross-sectional view of a filtration system with a primary filter element and a secondary or safety filter element installed therein in accordance with various embodiments herein.
FIG. 3 is a cross-sectional schematic view of portions of a filtration system according to various embodiments herein.
FIG. 4 is a schematic view of data storage hardware and data types in accordance with various embodiments herein.
FIG. 5 is a schematic view of a flow of filter elements in accordance with various embodiments herein.
FIG. 6 is a schematic view of components of a system in accordance with various embodiments herein.
FIG. 7 is a schematic view of components of a system in accordance with various embodiments herein.
FIG. 8 is a diagram of a method in accordance with various embodiments herein.
FIG. 9 is a diagram of a method in accordance with various embodiments herein.

While embodiments are susceptible to various modifications and alternative forms, specifics thereof have been shown by way of example and drawings, and will be described in detail. It should be understood, however, that the scope herein is not limited to the particular embodiments described. On the contrary, the intention is to cover modifications, equivalents, and alternatives falling within the spirit and scope herein.

### Detailed Description

As described above, many filtration systems include a portion (such as a filter element) that must be replaced periodically to maintain a desired level of filtration performance. Other portions of the filtration system, such as the filter housing, are designed to be substantially permanent and remain in place after initial installation (either during initial system/vehicle assembly in an OEM scenario or after installation of an after-market kit).

In some cases, filtration systems (or other components separate from the filtration system such as a separate reader or computation device) can include one or more processing circuits and/or processors and may execute various operations including performing various calculations, including but not limited to, end-of-life (EOL) calculations, plugging calculations, and the like. Firmware or other types of stored electronic instructions and/or operating software can be used to direct the operations performed by the system.

If the filtration system can be connected to a data network then it can be possible to send instructions to the filtration systems remotely and/or send updates including updates to firmware, operating software, or the like. However, the filtration system may not be connected to a data network and/or it may be impossible to send instructions or updates to the filtration systems installed in the field over a data network. Further, in some scenarios the filtration system may be connected to a data network, but for various reasons data flow may be limited to one-way (e.g., machine to network). In yet other scenarios, there may be a network connection, but it may be unreliable or inconsistently available. In these cases, it can be extremely challenging to keep the system components updated with the latest firmware, operating software, etc.

In accordance with embodiments herein, certain types of data, such as firmware and/or other software updates, can be loaded onto replaceable filter elements (or other replaceable system components) and can be conveyed onto filtration systems that are installed in the field when a filter element or other replaceable element is installed. In this manner, firmware and other software updates can be provided to remote, field-installed systems despite there being no direct connection available to those remote, field-installed systems through a data network. This approach can solve a long-standing problem associated with providing updates to remote, field-installed systems that are not directly reachable through a data network such as the Internet or another type of data network.

As used herein, the term "firmware" shall refer to a specific class of computer software that provides the low-level control for the device's specific hardware. Firmware is generally held in non-volatile memory devices such as ROM, EPROM, or flash memory.

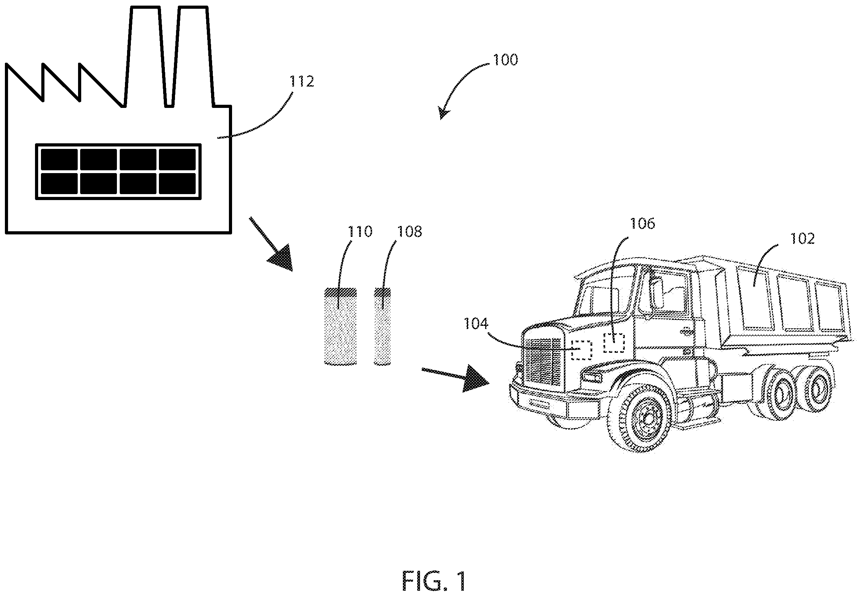

Referring now to FIG. 1, a schematic view of a supply chain flow of replaceable filter elements 108, 110 is shown in accordance with various embodiments herein. Specifically, in this view, the conveyance of filter elements from a manufacturing facility 112 onto a remote, field installed filtration system 104 is shown. Filter elements 108, 110 are produced, in whole or in part, at the manufacturing facility 112. The filter elements 108, 110 can be of various types. In some embodiments, the filter elements can be a primary filter element 110 and a secondary or safety filter element 108. In some embodiments, there may only be a single type of filter element that passes through the supply chain to enable replacement. The filter elements can be for used in air intake filtration systems, exhaust filtration systems, fuel filtration systems, oil/lubricant filtration systems, industrial air particulate filtration systems, air handling systems, or the like.

At or after the time of filter element manufacture, data can be loaded onto the filter elements 108, 110. For example, in some embodiments data can be loaded onto the filter elements at a manufacturing facility 112. In some embodiments, data can be loaded onto a data storage element prior to filter element manufacture and then the data storage element can be integrated with the other filter element components during filter element manufacturing processes (e.g., an inventory of pre-programmed data storage elements could be maintained and then used during the manufacturing process). In other embodiments, a data storage element can be integrated with other filter element components during manufacturing first and then data can be loaded onto the data storage element later (e.g., an inventory of data storage elements that still require programming could be maintained). In some embodiments, data can be loaded onto the filter elements after they have left the manufacturing facility 112, but are still within the supply chain. For example, in some embodiments, data can be loaded onto the filter elements at a distribution or transport facility. In still further embodiments, data can be loaded onto the filter elements at a customer facility before installation of the filter elements.

The filter elements can include data storage circuits/components thereon with which to receive and store the data. The data can be of various types, such as such as firmware and/or other software updates. In some embodiments, the filter elements 108, 110 are ultimately installed in a filtration system 104 within a vehicle 102. In this case, the filtration system 104 is a remote, field-installed system within a vehicle 102. However, it will be appreciated that the remote field-installed system could also be within another type of environment besides a vehicle such as a remote plant or factory with an industrial air filtration system. The vehicle 102 can include an ECU engine control unit) 106 and can, of course, also include many other components. In some embodiments, the ECU 106 and the filtration system 104 can exchange data. In some embodiments, the filtration system 104 can send data to the ECU 106 or receive data from the ECU 106 through a CAN bus system or other type of local data network. In other embodiments, however, the filtration system 104 and the ECU 106 are completely isolated from one another in terms of data exchange. In non-engine applications, a device equivalent to an ECU can be present, such as a master control system or other high-level system including a processor or other computing device and taking inputs from the overall system.

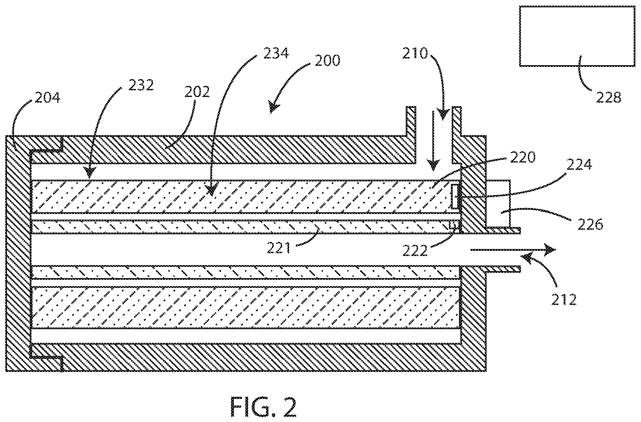

Referring now to FIG. 2, a schematic cross-sectional view of a filtration system 200 with a primary filter element 220 and a secondary or safety filter element 221 installed therein in accordance with various embodiments herein. This serves as merely one example of a filtration system and many other types of filtration systems are contemplated herein. With reference to the primary filter element 220, a filter body 232 and filter media 234 disposed within the filter body 232 can be included. However, it will be appreciated that the secondary or safety filter element 221, as well as other filter elements can similarly include a filter body and filter media. The filtration system 200 can include a housing 202 comprising a fluid inlet 210 and a fluid outlet 212, the housing defining an internal volume. A primary filter element 220 can be disposed within the internal volume of the housing 202 and can be configured to be removably disposed therein. The proximal end of the internal volume is configured to engage with a removable cover 204 that fits adjacent to the proximal end in order to seal off the proximal end of the housing from the flow of fluid there through. The removable cover 204 can engage the proximal end and remain attached thereto through various devices or structures including threads, friction-fit mechanisms, latches, buckles, snap-fit mechanisms, or the like.

A data storage element 222 can be associated with the secondary or safety filter element 221. A data storage element 224 can also be associated with the primary filter element 220. However, while not intending to be bound by theory, it is believed that in some embodiments the primary filter element 220 is replaced more often than the secondary or safety filter element 221. As such, in some embodiments, to maximize opportunities to convey data while simultaneously reducing cost and overall complexity of the system, only the primary filter element 220 includes a data storage element 224 and not the secondary or safety filter element 221. Alternatively, in some embodiments, a data storage element 222 associated with a secondary or safety filter element 221 stores a lesser amount of data, and/or a different kind of data, than that stored by a data storage element 224 associated with a primary filter element 220.

One or both of the data storage elements 222, 224 can communicate, either through a wired or wireless data connection, with a filter housing associated reader device 226. Alternatively, or in addition, one or both of the data storage elements 222, 224 can communicate, either through a wired or wireless data connection, with a separate reader device 228. The separate reader device 228 can be part of a vehicle or other equipment structure or can be off-vehicle or completely separate from other equipment structures.

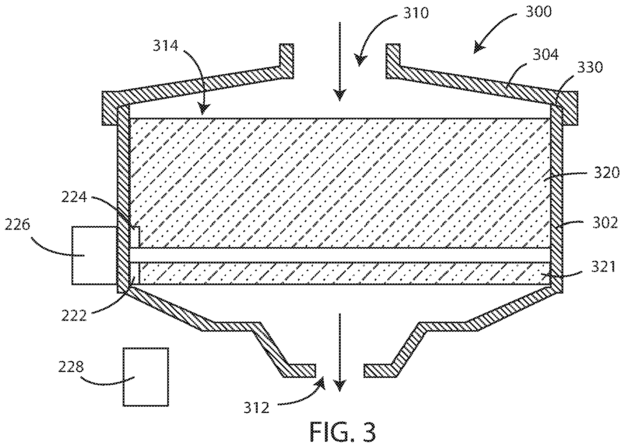

It will be appreciated that filtration systems herein can take on many different shapes and configurations. Referring now to FIG. 3, a schematic cross-sectional view is shown of a filtration system 300 with a primary filter element 320 and a secondary filter element 321 installed therein in accordance with various embodiments herein. The filtration system 300 can include a housing 302 comprising a fluid inlet 310 and a fluid outlet 312. The housing can define an internal volume 314. The primary filter element 320 can be disposed within the internal volume 314 of the housing 302 and can be configured to be removably disposed therein. The secondary filter element 321 can be disposed within the internal volume 314 of the housing 302 and can also be configured to be removably disposed therein. In this embodiment, the primary filter element 320 can be removed with or without also removing the secondary filter element 321.

The proximal end of the internal volume 314 is configured to engage with a cover 304 that fits adjacent to the proximal end 330 in order to seal off the proximal end of the housing from the flow of fluid there through.

A first data storage element 224 can be associated with, such as disposed on or in, the primary filter element 320 and a second data storage element 222 can be associated with, such as disposed on or in, the secondary filter element 321. One or both of the data storage elements 222, 224 can communicate, either through a wired or wireless data connection, with a filter housing associated reader 226. Alternatively, or in addition, one or both of the data storage elements 222, 224 can communicate, either through a wired or wireless data connection, with a separate reader device 228.

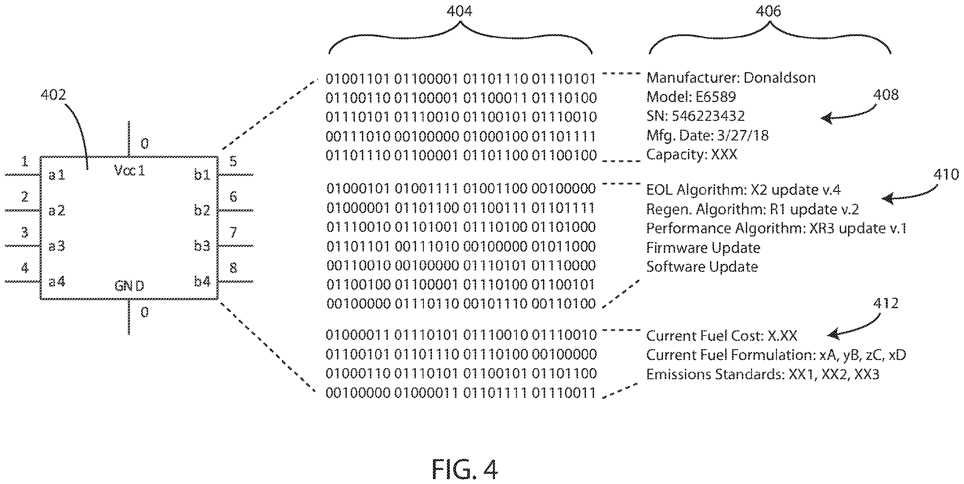

Referring now to FIG. 4, a schematic view is shown of data storage hardware and data types in accordance with various embodiments herein. In various embodiments, an electronic circuit or electronic component 402 can be used to store data 404. Various types of memory storage can be used, including dynamic RAM (D-RAM), read only memory (ROM), static RAM (S-RAM), disk storage, flash memory, EPROM, battery-backed RAM such as S-RAM or D-RAM and any other type of digital data storage component. In some embodiments, the electronic circuit or electronic component includes non-volatile memory and/or volatile memory. In some embodiments, the electronic circuit or electronic component can include transistors interconnected so as to provide positive feedback operating as latches or flip flops, providing for circuits that have two or more metastable states, and remain in one of these states until changed by an external input. Memory storage can be based on such flip-flop containing circuits. Memory storage can also be based on the storage of charge in a capacitor or on other principles.

In some embodiments, the electronic circuit or electronic component 402 storing data can be in electronic communication with other components such as a communication circuit, and antenna, a power source (such as a battery), or the like.

The data 404 stored by the electronic circuit or electronic component 402 can be of various types 406 including, but not limited to filter element intrinsic data 408, operational program data 410, and extrinsic data 412.

By way of example, in some embodiments, the data 404 can include filter element intrinsic data 408. Examples of filter element intrinsic data 408 can include, but are not limited to, a manufacturing date; a filter element ID; a filter element model ID; a filter element manufacturer ID; a filter element manufacturing plant ID; and a filter element performance characteristic. Filter element performance characteristics can include, but are not limited to, filter element capacity information, filter element terminal pressure drop associated with model ID, filter element loading curves, filter element loading coefficients, typical fuel consumption rate for a machine associated with the filter element model ID, fuel usage penalty factor for increased filter element pressure drop for a machine associate with the filter element model ID. In various embodiments, the filter element intrinsic data 408 can be in the form of ASCII, hexadecimal, octal, decimal, binary, HTML, or other character or symbol codes stored electronically. In various embodiments, the filter element intrinsic data 408 is not in the form of compiled code. In some embodiments, filter element intrinsic data 408 can be encrypted at rest on the filter element.

According to the invention, the data 404 includes operational program data 410.

According to the invention, operational program data 410 comprises at least one of an algorithm definition, an operating software update, and a firmware update. In some embodiments, an algorithm definition can include at least one of an end-of-life (EOL) prediction algorithm definition, a regeneration event recommendation algorithm definition, and a filtration performance algorithm definition. In various embodiments, the operational program data can be compiled code, compiled code modules, one or more compiled code libraries, binary code libraries, object code, assembly code, and/or machine code or the like. In some embodiments, operational program data 410 can be encrypted at rest on the filter element.

In some embodiments, the operating software update can be a reader device operating software update or an operating software update for a device other than a reader device. In some embodiments, the firmware update can be a reader device firmware update or a firmware update for a device other than a reader device.

In some embodiments, the data 404 can include extrinsic data 412. Extrinsic data can be important for calculating economically optimal filter element change/replacement times/intervals. Examples of extrinsic data 412 can include, but are not limited to, fuel cost per unit of fluid measure, fuel formulation data, environmental emissions regulation data, date of extrinsic data revision, cost of filter element, labor cost to change filter element associated with filter element model ID, etc. In various embodiments, the extrinsic data 412 can be in the form of ASCII, hexadecimal, octal, decimal, binary, HTML, or other character or symbol codes stored electronically. In various embodiments, the extrinsic data 412 is not in the form of compiled code. In some embodiments, extrinsic data 412 can be encrypted at rest on the filter element.

Further examples of the types of data that can be conveyed in accordance with embodiments herein are shown with respect to Table 1 below.

**TABLE 1**

| **Data Type** | **Examples** |
|---|---|
| Filter Element Intrinsic Data | • Filter Element Manufacturing Date |
| | • Filter Element Serial Number |
| | • Filter Element Model ID |
| | • Filter Element Manufacturer ID |
| | • Filter Element Plant ID |
| | • Filter Element Capacity Information |
| | • Filter Element Terminal Pressure Drop Associated with Model ID |
| | • Filter Element Loading Curves |
| | • Filter Element Loading Coefficients |
| | • Typical Fuel Consumption Rate for Machine Associated with Filter Element Model ID |
| | • Fuel Usage Penalty Factor for Increased Filter Element Pressure Drop for Machine Associated with Filter Element Model ID |
| Operational Program Data | • Software Updates |
| | • Firmware Updates |
| | • End-of-Life Prediction Algorithms |
| | • Regeneration Prediction/initiation Algorithms |
| | • Performance Calculation/Tracking Algorithms |
| | • Date/Version of Software/Firmware Update |
| Extrinsic Data | • Current Fuel Cost |
| | • Current Fuel Formulation |
| | • Current Emissions Regulations |
| | • Cost of Filter Element |
| | • Labor Cost to Change Filter Element Associated with Filter Element Model ID |
| | • Date of Extrinsic Data Revision |

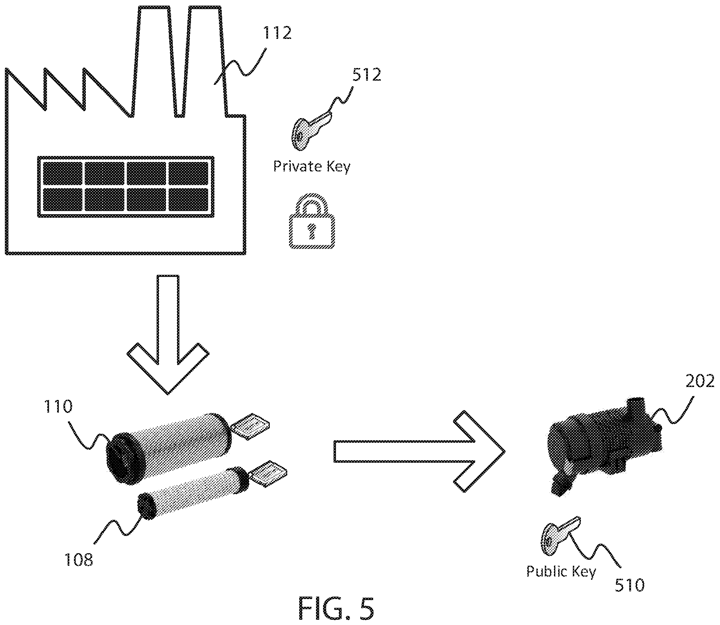

In various embodiments, data carried by filter elements or portions thereof can be encrypted and/or digitally signed to secure the data and/or provide authentication as to the source of the data. Referring now to FIG. 5, a schematic view is shown of a flow of filter elements in accordance with various embodiments herein.

At a manufacturing facility 112, or at another point during distribution, data can be loaded onto a data storage element of a filter element. In some embodiments, the data can be digitally signed using a manufacturer-specific private key 512 (part of a standard public/private key architecture or PK1 - public key infrastructure). By applying a digital signature with a manufacturer-specific private key 512, later on the public key 510 for that manufacturer can be used to verify that the data carried by the filter element is authentic and did, in fact, come from the manufacturer or the holder of the private key.

Alternatively, or in addition to digitally signing the data, the data can be encrypted using a manufacturer specific public key. In this way, only a device holding the manufacturer specific private key (forming a pair with the public key used for encryption - separate from the key pair used for digitally signing) can be used to decrypt the data.

The filter elements 108, 110 can be installed in a filter housing 202. After installation, a public key of the manufacturer can be used to verify the digital signature applied at the manufacturing facility 112. Alternatively, or in addition, a private key of the manufacturer can be used to decrypt the data content stored by the data storage element. A private key of the manufacturer can be stored with the filter housing 202 and/or a reader device at the time the filter housing 202 or reader device is manufactured or at the time the filter housing 202 or the reader device is installed on vehicle, machine, in a plant location, etc. The public key of the manufacturer can also be stored with the filter housing 202 and/or reader device. In some embodiments, the public key of the manufacturer can be passed along to the filter housing 202 or reader device by being carried with a filter element.

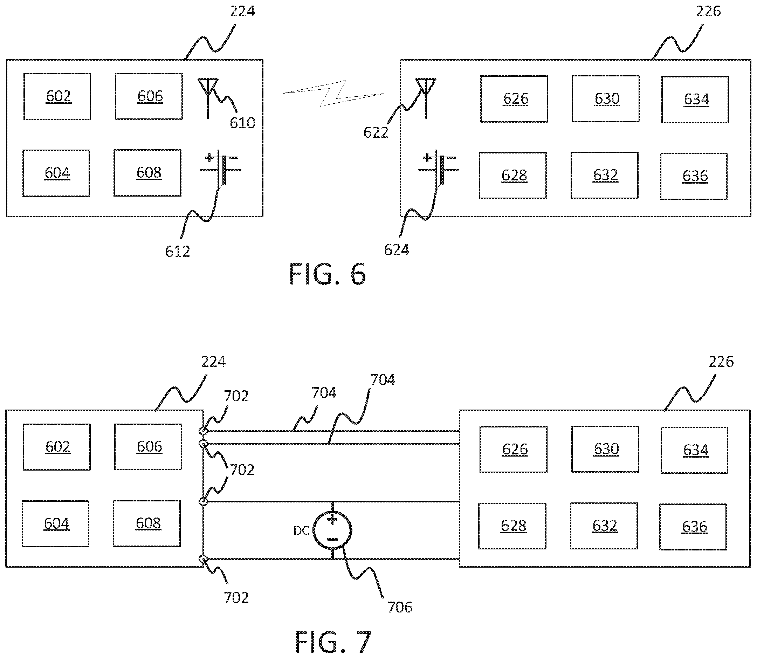

Circuitry associated with filter elements herein can include various specific electronic components in order to execute operations as described herein. Similarly, circuitry associated with reader devices herein (either as associated with a filter housing or other filter structure or as located separately from a filter housing or other filter structure) can include various specific electronic components in order to execute operations as described herein. Referring now to FIG. 6, a schematic view of components of a system is shown in accordance with various embodiments herein.

Components associated with a data storage element 224 can include one or more of an antenna 610, a power supply circuit 612 (which can include one or more of a battery, a capacitor, a power-receiver such as a wireless power receiver), a control circuit 602 (which can include a processor, a microcontroller, an ASIC, or the like), a memory storage circuit 604 (which can include volatile or non-volatile electronic memory), a communication circuit 606, and a cryptographic circuit 608 (which can include a specialized cryptographic processor and/or data associated with cryptographic functions). In some embodiments herein, a wireless power receiver can include an LC circuit. In some embodiments, the wireless power receiver can include an RF power receiver. In some embodiments, one or more components of a power supply circuit, such as a wireless power receiver, can be disposed on or in the filter body.

It will be appreciated that in some embodiments a specific data storage element 224 may not include all of the components shown and described with respect to FIG. 6. In addition, in some embodiments data storage element 224 may include additional components beyond what is shown and described with respect to FIG. 6.

Components associated with a reader device 226 can include one or more of an antenna 622, a power supply circuit 624 (which can include one or more of a battery, a capacitor, or a power-receiver), a control circuit 626 (which can include a processor, a microcontroller, an ASIC, or the like), a memory storage circuit 628 (which can include volatile or non-volatile memory), a communication circuit 630, a cryptographic circuit 632 (which can include a specialized cryptographic processor and/or data associated with cryptographic functions), a clock circuit 634, and a location circuit 636.

In some embodiments, communication between components of a system can be conducted wirelessly. However, in other embodiments, communication between components of a system can be conducted through a wired connection. Referring now to FIG. 7, a schematic view is shown of components of a system in accordance with various embodiments herein.

Components associated with a data storage element 224 can include one or more of a control circuit 602 (which can include a processor, a microcontroller, an ASIC, or the like), a memory storage circuit 604 (which can include volatile or non-volatile electronic memory), a communication circuit 606, and a cryptographic circuit 608 (which can include a specialized cryptographic processor and/or data associated with cryptographic functions). Power can be provided from a power supply 706 that is external to the data storage element (and could be from a vehicle or another source). The data storage element 224 can be connected to the power supply via electrical contacts 702. As represented in FIG. 7, the power supply 706 is a DC power source, but AC power sources are also contemplated herein. It will be appreciated that in some embodiments a specific data storage element 224 may not include all of the components shown and described with respect to FIG. 7. In addition, in some embodiments data storage element 224 may include additional components beyond what is shown and described with respect to FIG. 7.

Components associated with a reader device 226 can include one or more of a control circuit 626 (which can include a processor, a microcontroller, an ASIC, or the like), a memory storage circuit 628 (which can include volatile or non-volatile memory), a communication circuit 630, a cryptographic circuit 632 (which can include a specialized cryptographic processor and/or data associated with cryptographic functions), a clock circuit 634, and a location circuit 636. Power can be provided from a power supply 706 that is external to the data storage element (and could be from a vehicle or another source). The reader device 226 can be connected to the data storage element 224 (such as when the filter element is installed in a filter housing) via wires 704.

### Methods

Various methods are included herein. In some embodiments, a method of providing data to a filtration system in the field is included. The method can include storing operational program data on a filter element, the filter element comprising a filter body; a filter media disposed within the filter body; and a data storage element associated with the filter element. The method can further include installing the filter element within a filter housing. The filter housing can define an interior volume. The filter element can be configured to fit within the interior volume of the filter housing. The method can further include passing the operational program data onto a reader device.

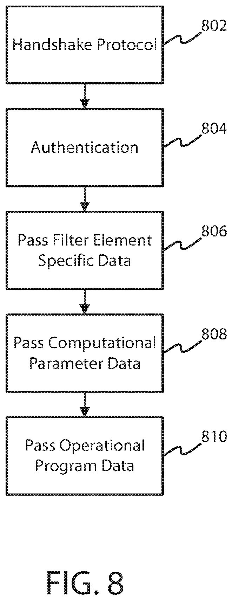

Referring now to FIG. 8, a diagram is shown of a method in accordance with various embodiments herein. The method can include an operation including a handshake protocol 802. The method can also include an operation including an authentication protocol 804.

The method can also include operations of passing data from a data storage element associated with a filter element to a reader device (associated with the filter housing or remotely located). In some embodiments, data can be passed in a particular order. By way of example, data that is directly needed for operation of the filtration system, if any, can be transferred first. For example, filter element intrinsic data such as that described above can be transferred 806 first in some embodiments. In some embodiments, extrinsic data can be transferred 808 next. In some embodiments, operational program data can be transferred 810 last.

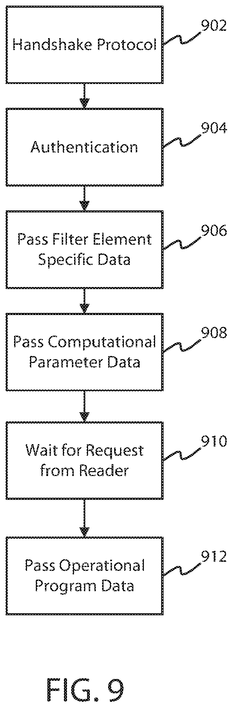

In some embodiments, reader devices herein can prompt the filter element and/or the data storage element thereon when certain types of data are desired. In some embodiments, certain types of data are automatically provided by the data storage element while other types of data are only provided after receiving a specific prompt for the same. For example, in some embodiments operational program data may only be provided after the filter element receives a specific prompt from a reader device and/or only after the reader device is properly authenticated. Referring now to FIG. 9, a diagram is shown of a method in accordance with various embodiments herein. The method can include an operation including a handshake protocol 902. The method can also include an operation including an authentication protocol 904.

The method can also include an operation of passing filter element intrinsic data 906 from a data storage element associated with a filter element to a reader device (associated with the filter housing or remotely located). The method can also include an operation of passing extrinsic data 908 from a data storage element associated with a filter element to a reader device (associated with the filter housing or remotely located). The method can also include an operation of waiting for a further request from the reader device 910. Assuming such a request is received, the method can also include an operation of passing operational program data 912 from a data storage element associated with a filter element to a reader device (associated with the filter housing or remotely located).

The transfer of data from the filter element onto a reader device can be impacted by the outcome of the authentication protocol 904. In some embodiments, if the authentication protocol 904 fails, then no data is transferred. However, in some embodiments, some data can be transferred even if the authentication protocol 904 fails. For example, filter element intrinsic data 906 is provided regardless of whether proper authentication resulted from the authentication protocol 904, but other types of data are held back if the authentication protocol 904 fails. In some embodiments, the system can enter a default or baseline operating mode if the authentication protocol 904 fails. In some embodiments, the default or baseline operation mode can include the filtration system sending a signal on to other components that it has entered a default or baseline operation mode. In some embodiments, the default or baseline operation mode can include the use of algorithms that are more conservative (e.g., predicting an earlier end-of-life for the filter element and/or shorter servicing intervals) than would be applied if the authentication protocol 904 terminated successfully.

In various embodiments, the transfer and/or use of certain types of data, such as operational program data can be contingent based on other data such as dates of revisions and/or version information. For example, information such as a date or version of a carried piece of operational program data such as a software or firmware update can be evaluated before or after transferring the operational program data. In this manner, if the reader device (or other device that would be updated using the operational program data carried) has already received the update or is already operating with a more recent version of the operational program data then the operational program data may not be transferred.

Alternatively, if data that is outdated or otherwise obsolete is transferred, then it may simply be discarded if the reader device (or other device that would be updated using the operational program data carried) has already received the update or is already operating with a more recent version of the operational program data.

Similarly, information such as a date of extrinsic data revision can be evaluated before the extrinsic data in question is actually put to use in calculations. If the extrinsic data revision date is not sufficiently recent or if the currently relied upon extrinsic data has a more recent revision date, then the system can reject the extrinsic data carried by the filter element and rely upon previously obtained extrinsic data and/or default extrinsic data values.

Data can also be evaluated and excluded or included based on additional factors. By way of example, various types of data herein, and particularly extrinsic data can be specific for geography (for example, country and/or region). As such, data herein, such as extrinsic data can be marked with one or more countries and/or regions of validity. This can be evaluated by one or more components of the system based on the current location and/or stored location of the filtration system and/or reader device. If the extrinsic data is not valid based on a country and/or region determination, then the system can reject the extrinsic data carried by the filter element and rely upon previously obtained extrinsic data and/or default extrinsic data values. In some embodiments, multiple versions of data can be carried by a filter element. For example, multiple versions of one or more types of extrinsic data can be carried by a filter element wherein the multiple versions correspond to multiple countries and/or regions. In some embodiments, the system and/or reader device can evaluate the versions and select the correct version and discard the rest. In some embodiments, a country and/or region can be provided to the filter element by the system and/or reader device and then the filter element only transfers the correct version to the system and/or reader device.

In some embodiments, evaluation of a date relating to data carried by a filter element can include comparing the date to a date value provided by an ECU or a date value maintained by a clock circuit that forms part of the filtration system or with which the filtration system communicates. If the comparison reveals that the date of the data carried by the filter element exceeds a threshold value (such as greater than 10, 30, 60, 90, 120, 180, 365, or 730 days old), then the system can initiate one or more of terminating any further transfer of data, discarding the transferred data, reverting operation to a default or baseline mode, or the like.

It will be appreciated that while many embodiments herein are directed to filtration systems and associated filter elements, aspects herein can also be used in conjunction with systems other than filtration systems. For example, embodiments herein can include disposable elements that include a data storage element and move through a supply chain and can be installed within a system in the field to deliver a data payload to the system in the field. Such systems can include those relying upon disposable/consumable elements and can specifically include, but are not limited to, consumer appliances, industrial systems, power systems, and the like. Specific disposable/consumable elements can include batteries, tool blades, physical consumables, and the like.

### Data Transfer Order

In some embodiments, data can be passed in a particular order. By way of example, data that is directly needed for operation of the filtration system, if any, can be prioritized and transferred first. In various embodiments, the data payload carried by the filter element can include prioritized and non-prioritized data. The prioritized data can be transferred first to a reader device associated with a housing or a reader device external to the filter housing. For example, filter element intrinsic data can be prioritized data and can be transferred first in some embodiments. In some embodiments, extrinsic data can be transferred after filter element intrinsic data. In some embodiments, operational program data, including but not limited to compiled program code, object code, assembly code, and/or machine code, can be given the lowest priority and can be transferred last.

Aspects have been described with reference to various specific and preferred embodiments and techniques. However, it should be understood that many variations and modifications may be made while remaining within the spirit and scope herein. As such, the embodiments described herein are not intended to be exhaustive or to limit the invention to the precise forms disclosed in the following detailed description. Rather, the embodiments are chosen and described so that others skilled in the art can appreciate and understand the principles and practices.

It should be noted that, as used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

It should also be noted that, as used in this specification and the appended claims, the phrase "configured" describes a system, apparatus, or other structure that is constructed or configured to perform a particular task or adopt a particular configuration to. The phrase "configured" can be used interchangeably with other similar phrases such as arranged and configured, constructed and arranged, constructed, manufactured and arranged, and the like.

## Claims

1. A filter element for a filtration system, the filter element comprising:
a filter body (232);
a filter media (234) disposed within the filter body (232); and
a data storage element (222, 224) associated with the filter element, wherein the data storage element is integrated with, or disposed on or in the filter element,
**characterized in that** the data storage element (222, 224) comprises operational program data, the operational program data comprising at least one of:
an algorithm definition;
an operating software update; and
a firmware update.

2. The filter element claim 1, the algorithm definition comprising at least one selected from the group consisting of:
an end-of-life (EOL) prediction algorithm definition;
an economically optimal change interval prediction algorithm definition;
a regeneration event recommendation algorithm definition; and
a filtration performance calculation or tracking algorithm definition.

3. The filter element of any of claims 1-2, the operating software update comprising at least one of:
a reader device (226, 228) operating software update; and
an operating software update for a device other than a reader device.

4. The filter element of any of claims 1-3, the firmware update comprising at least one of:
a reader device (226, 228) firmware update; and
a firmware update for a device other than a reader device.

5. The filter element of any of claims 1-4, wherein the data storage element (222, 224) further comprises filter element intrinsic data including a filter element performance characteristic parameter, the filter element performance characteristic parameter including at least one selected from the group consisting of:
filter element capacity information for model ID;
filter element terminal pressure drop for model ID;
filter element loading curve for model ID;
filter element loading coefficient for model ID;
typical fuel consumption rate for machine associate with filter element model ID; and
fuel usage penalty factor for increased filter element pressure drop for machine associated with filter element model ID.

6. The filter element of any of claims 1-5, wherein the data storage element (222, 224) further comprises filter element extrinsic data, the extrinsic data comprising at least one of:
fuel cost per unit of fluid measure;
fuel formulation data;
environmental emissions regulation data;
cost of filter element;
labor cost to change filter element; and
date of extrinsic data revision.

7. A filtration system comprising:
a filter element according to any one of claims 1-6; and
a reader device (226, 228) external to the filter element and in wired or wireless communication with the filter element.

8. The filtration system of claim 7, further comprising
a filter housing (202), the filter housing (202) defining an interior volume, the filter element configured to fit within the interior volume of the filter housing (202);
the reader device (226) associated with the filter housing (202).

9. The filtration system of any of claims 7-8, further comprising electrical contacts for forming a wired connection between the data storage element (222, 224) and the filter housing (202).

10. A method of providing data to a filtration system in the field comprising:
storing operational program data on a filter element according to any one of claims 1-6;
installing the filter element within a filter housing (202), the filter housing (202) defining an interior volume, the filter element configured to fit within the interior volume of the filter housing (202); and
passing the operational program data onto a reader.

11. The method of claim 10, wherein the reader is associated with the filter housing (202).

12. The method of any of claims 10-11, further comprising passing filter element intrinsic data to the reader.

13. The method of any of claims 10-12, wherein filter element intrinsic data is passed before the operational program data.

14. The method of any of claims 10-13, wherein the operational program data is not passed until specifically requested by the reader.

15. The method of any of claims 10-14, further comprising passing extrinsic data to the reader.

## Patentansprüche

1. Filterelement für ein Filtrationssystem, wobei das Filterelement aufweist:
einen Filterkörper (232);
ein Filtermedium (234), das in dem Filterkörper (232) angeordnet ist; und
ein Datenspeicherelement (222, 224), das dem Filterelement zugeordnet ist, wobei das Datenspeicherelement mit dem Filterelement integriert oder darauf oder darin angeordnet ist,
**dadurch gekennzeichnet, dass** das Datenspeicherelement (222, 224) Betriebsprogrammdaten aufweist, wobei die Betriebsprogrammdaten zumindest eine aufweisen von:
einer Algorithmusdefinition;
einer Betriebssoftware-Aktualisierung; und
einer Firmware-Aktualisierung.

2. Das Filterelement von Anspruch 1, wobei die Algorithmusdefinition zumindest eine aufweist, die aus der Gruppe ausgewählt ist, bestehend aus:
einer Lebensende (EOL)-Vorhersage-Algorithmusdefinition;
einer wirtschaftlich optimalen Wechselintervallvorhersage-Algorithmusdefinition;
einer Regenerationsereignisempfehlungs-Algorithmusdefinition; und
einer Filtrationsleistungsberechnungs- oder Verfolgungs-Algorithmusdefinition.

3. Das Filterelement von einem der Ansprüche 1 bis 2, wobei die Betriebssoftware-Aktualisierung zumindest eine aufweist von:
einer Betriebssoftware-Aktualisierung für eine Lesevorrichtung (226, 228); und
einer Betriebssoftware-Aktualisierung für eine andere Vorrichtung als eine Lesevorrichtung.

4. Das Filterelement von einem der Ansprüche 1 bis 3, wobei die Firmware-Aktualisierung zumindest eine aufweist von:
einer Lesevorrichtung (226, 228)-Firmware-Aktualisierung; und
einer Firmware-Aktualisierung für eine andere Vorrichtung als eine Lesevorrichtung.

5. Das Filterelement von einem der Ansprüche 1 bis 4, wobei das Datenspeicherelement (222, 224) ferner Filterelement-intrinsische Daten aufweist, welche einen Filterelementleistungs-Kennparameter enthalten, wobei der Filterelementleistungs-Kennparameter zumindest eine enthält, die aus der Gruppe ausgewählt ist, bestehend aus:
einer Filterelementkapazitätinformation für Modell-ID;
einem Filterelementanschlussdruckabfall für Modell-ID;
einer Filterelementladekurve für Modell-ID;
einem Filterelementladekoeffizienten für Modell-ID;
einer typischen Kraftstoffverbrauchsrate für eine dem Filterelement-ID zugeordnete Maschine; und
einem Kraftstoffverbrauchsstraffaktor für einen erhöhten Filterelementdruckabfall für eine der Filterelementmodell-ID zugeordnete Maschine.

6. Das Filterelement von einem der Ansprüche 1 bis 5, wobei das Datenspeicherelement (222, 224) ferner Filterelement-extrinsische Daten aufweist, wobei die extrinsischen Daten zumindest eines aufweisen von:
Kraftstoffkosten pro Einheit eines Fluidmaßes;
Kraftstoffformulierungsdaten;
Umweltemissionen-Vorschriftsdaten;
Kosten eines Filterelements;
Arbeitskosten zum Wechseln eines Filterelements; und
Datum extrinsischer Datenrevision.

7. Filtrationssystem, welches aufweist:
ein Filterelement nach einem der Ansprüche 1 bis 6; und
eine Lesevorrichtung (226, 228) außerhalb des Filterelements und in verdrahteter oder drahtloser Kommunikation mit dem Filterelement.

8. Das Filtrationssystem von Anspruch 7, das ferner aufweist:
ein Filtergehäuse (202), wobei das Filtergehäuse (202) ein Innenvolumen definiert, wobei das Filterelement zum Einsetzen in das Innenvolumen des Filtergehäuses (202) konfiguriert ist;
wobei die Lesevorrichtung (226) dem Filtergehäuse (202) zugeordnet ist.

9. Das Filtrationssystem von einem der Ansprüche 7 bis 8, das ferner elektrische Kontakte zur Bildung einer verdrahteten Verbindung zwischen dem Datenspeicherelement (222, 224) und dem Filtergehäuse (202) aufweist:

10. Verfahren zum Liefern von Daten zu einem Filtrationssystem in dem Gebiet, welches aufweist:
Speichern von Betriebsprogrammdaten zu einem Filterelement nach einem der Ansprüche 1 bis 6;
Installieren des Filterelements innerhalb eines Filtergehäuses (202), wobei das Filtergehäuse (202) ein Innenvolumen definiert, wobei das Filterelement zum Einsetzen in das Innenvolumen des Filtergehäuses (202) konfiguriert ist; und
Überführen der Betriebsprogrammdaten auf eine Lesevorrichtung.

11. Das Verfahren von Anspruch 10, wobei die Lesevorrichtung dem Filtergehäuse (202) zugeordnet ist.

12. Das Verfahren von einem der Ansprüche 10 bis 11, das ferner aufweist, Filterelement-intrinsische Daten zu der Lesevorrichtung zu überführen.

13. Das Verfahren von einem der Ansprüche 10 bis 12, wobei die Filterelement-intrinsischen Daten vor den Betriebsprogrammdaten überführt werden.

14. Das Verfahren von einem der Ansprüche 10 bis 13, wobei die Betriebsprogrammdaten bis zu einer spezifischen Anfrage von der Lesevorrichtung nicht überführt werden.

15. Das Verfahren von einem der Ansprüche 10 bis 14, das ferner aufweist, extrinsische Daten zu der Lesevorrichtung zu überführen.

## Revendications

1. Élément filtrant pour un système de filtration, l'élément filtrant comprenant :
un corps de filtre (232) ;
un média filtrant (234) disposé à l'intérieur du corps de filtre (232) ; et
un élément de stockage de données (222, 224) associé à l'élément filtrant, l'élément de stockage de données étant intégré à, ou disposé sur ou dans l'élément filtrant,
**caractérisé en ce que** l'élément de stockage de données (222, 224) comprend des données de programme opérationnel, les données de programme opérationnel comprenant au moins l'une de :
une définition d'algorithme ;
une mise à jour de logiciel opérationnel ; et
une mise à jour du firmware.

2. Élément filtrant selon la revendication 1, la définition d'algorithme comprenant au moins l'une sélectionnée dans le groupe constitué de :
une définition d'algorithme de prédiction de fin de vie (EOL) ;
une définition d'algorithme de prédiction d'intervalle de changement économiquement optimal ;
une définition d'algorithme de recommandation d'événement de régénération ; et
une définition d'algorithme de calcul ou de suivi d'une performance de filtration.

3. Élément filtrant selon l'une quelconque des revendications 1 à 2, la mise à jour de logiciel opérationnel comprenant au moins l'une de :
une mise à jour de logiciel opérationnel de dispositif de lecture (226, 228) ; et
une mise à jour de logiciel opérationnel pour un dispositif autre qu'un dispositif de lecture.

4. Élément filtrant selon l'une quelconque des revendications 1 à 3, la mise à jour du firmware comprenant au moins l'une de :
une mise à jour d'un firmware de dispositif de lecture (226, 228) ; et
une mise à jour d'un firmware pour un dispositif autre qu'un dispositif de lecture.

5. Élément filtrant selon l'une quelconque des revendications 1 à 4, l'élément de stockage de données (222, 224) comprenant en outre des données intrinsèques d'élément filtrant comprenant un paramètre de caractéristique de performance d'élément filtrant, le paramètre de caractéristique de performance d'élément filtrant comprenant au moins l'un sélectionné dans le groupe constitué :
des informations de capacité d'élément filtrant pour l'ID de modèle ;
d'une chute de pression terminal d'élément filtrant pour l'ID de modèle ;
d'une courbe de charge d'élément filtrant pour l'ID de modèle ;
d'un coefficient de charge d'élément filtrant pour l'ID de modèle ;
d'un taux de consommation typique de carburant pour une machine associée à l'ID de modèle d'élément filtrant ; et
d'un facteur de pénalité d'usage de combustible pour une chute accrue de pression de l'élément filtrant pour une machine associée à l'ID de modèle d'élément filtrant.

6. Élément filtrant selon l'une quelconque des revendications 1 à 5, l'élément de stockage de données (222, 224) comprenant en outre des données extrinsèques d'élément filtrant, les données extrinsèques comprenant au moins l'un :
d'un coût de combustible par unité de mesure de fluide ;
de données de formulation de combustible ;
de données de régulation des émissions dans l'environnement ;
d'un coût d'élément filtrant ;
d'un coût de main d'oeuvre pour le changement d'élément filtrant ; et
d'une date de révision de données extrinsèques.

7. Système de filtration comprenant :
un élément filtrant selon l'une quelconque des revendications 1 à 6 ; et
un dispositif de lecture (226, 228) externe à l'élément filtrant et en communication câblée ou sans fil avec l'élément filtrant.

8. Système de filtration selon la revendication 7, comprenant en outre
un logement de filtre (202), le logement de filtre (202) définissant un volume intérieur, l'élément filtrant conçu pour s'ajuster à l'intérieur du volume intérieur du logement de filtre (202) ;
le dispositif de lecture (226) associé au logement de filtre (202).

9. Système de filtration selon l'une quelconque des revendications 7 à 8, comprenant en outre des contacts électriques pour former une connexion câblée entre l'élément de stockage de données (222, 224) et le logement de filtre (202).

10. Procédé de fourniture de données à un système de filtration dans le domaine comprenant :
un stockage de données de programme opérationnel sur un élément filtrant selon l'une quelconque des revendications 1 à 6 ;
l'installation de l'élément filtrant à l'intérieur d'un logement de filtre (202), le logement de filtre (202) définissant un volume intérieur, l'élément filtrant conçu pour s'ajuster à l'intérieur du volume intérieur du logement de filtre (202) ; et
le passage des données de programme opérationnel sur un lecteur.

11. Procédé selon la revendication 10, le lecteur étant associé au logement de filtre (202).

12. Procédé selon l'une quelconque des revendications 10 à 11, comprenant en outre le passage de données intrinsèques de l'élément filtrant au lecteur.

13. Procédé selon l'une quelconque des revendications 10 à 12, les données intrinsèques de l'élément filtrant étant passées avant les données de programme opérationnel.

14. Procédé selon l'une quelconque des revendications 10 à 13, les données de programme opérationnel n'étant pas passées jusqu'à ce qu'elles soient spécifiquement requises par le lecteur.

15. Procédé selon l'une quelconque des revendications 10 à 14, comprenant en outre le passage des données extrinsèques au lecteur.
